(19) Europäisches Patentamt
European Patent Office
Office européen des brevets

(11) **EP 2 737 591 B1**

(12) **FASCICULE DE BREVET EUROPEEN**

(45) Date de publication et mention
de la délivrance du brevet:
**06.05.2020 Bulletin 2020/19**

(21) Numéro de dépôt: **12742874.6**

(22) Date de dépôt: **26.07.2012**

(51) Int Cl.:
*H02J 3/18* *(2006.01)*     *H02J 3/38* *(2006.01)*
*H02J 7/00* *(2006.01)*     *H02J 7/04* *(2006.01)*
*H02J 3/00* *(2006.01)*

(86) Numéro de dépôt international:
**PCT/EP2012/064700**

(87) Numéro de publication internationale:
**WO 2013/014238 (31.01.2013 Gazette 2013/05)**

(54) **RECHARGE D'UN PARC DE BATTERIES**

WIEDERAUFLADUNG EINER GRUPPE VON BATTERIEN

RECHARGING OF A POOL OF BATTERIES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.07.2011 FR 1156796**

(43) Date de publication de la demande:
**04.06.2014 Bulletin 2014/23**

(73) Titulaire: **COMMISSARIAT À L'ÉNERGIE
ATOMIQUE ET AUX
ÉNERGIES ALTERNATIVES
75015 Paris (FR)**

(72) Inventeurs:
• **GUILLOU, Hervé**
  **F-75015 Paris (FR)**
• **HA, Duy Long**
  **F-73000 Chambery Le Vieux (FR)**

(74) Mandataire: **Novaimo
Europa 1
362, avenue Marie Curie
Archamps Technopole
74166 Saint Julien-en-Genevois Cedex (FR)**

(56) Documents cités:
JP-A- 2010 213 507      US-A1- 2010 017 249
US-A1- 2011 127 944     US-A1- 2011 133 688

EP 2 737 591 B1

**Description**

L'invention concerne un procédé de gestion de la charge d'un parc de batteries mis en œuvre au niveau d'un dispositif de charge alimenté par au moins une source d'énergie et un dispositif de charge de batteries en tant que tel mettant en œuvre un tel procédé.

Il existe de nombreux dispositifs fonctionnant à l'aide d'une batterie, comme par exemple les véhicules électriques ou hybrides. Lorsque l'utilisateur d'un tel dispositif électrique s'aperçoit que la charge de sa batterie est trop faible, il la relie à un dispositif de recharge qui exploite une source d'énergie électrique fournissant un courant de recharge de la batterie.

Lorsque le dispositif électrique concerné est un véhicule électrique, le dispositif de recharge de la batterie peut se présenter sous la forme d'un abri définissant une place de parking et équipé électriquement pour la connexion électrique avec la batterie. Un tel abri peut être équipé de panneaux photovoltaïques générant une énergie électrique qui est utilisée pour la recharge de la batterie du véhicule. Dans la pratique, le conducteur positionne son véhicule sous l'abri, le connecte électriquement à la source d'énergie de l'abri pour initier immédiatement la recharge de la batterie. La phase de recharge est ensuite automatiquement stoppée par le dispositif de recharge dès que la batterie atteint sa pleine charge.

Les dispositifs de recharge existants sous la forme d'abris présentés ci-dessus ne sont pas optimisés. En effet, la recharge des différentes batteries est initiée dès leur connexion électrique, avec pour objectif leur pleine charge. Or, cette recharge peut requérir une énergie provenant d'une source de production d'électricité coûteuse et/ou polluante au moment de la recharge de la batterie. De plus, cette source d'énergie peut être insuffisante à un instant donné, notamment si plusieurs batteries sont en charge simultanément et/ou si des sources d'énergie renouvelables sont utilisées, comme une source solaire ou éolienne, par nature fluctuante. D'autre part, la recharge totale de chaque batterie n'est peut-être pas nécessaire pour l'utilisation future envisagée.

Pour pallier à ces inconvénients, le document FR2952247 propose une planification de la recharge des véhicules sur la base de la connaissance de leur date de départ et d'un niveau de charge souhaité.

Le document US5548200 détermine le choix des conditions électriques et le moment de la recharge pour optimiser le coût de la recharge, pendant les heures creuses par exemple.

Le document US2010017249 énonce des grands principes pour la charge d'un parc de batteries consistant à tenir compte par exemple du coût et de la qualité de l'énergie disponible.

Le document JP2010213507 décrit un procédé de production d'énergie qui combine l'utilisation d'une batterie avec une unité de production photovoltaïque, sans apporter de solution pour la gestion d'un parc de batteries.

Les solutions existantes restent insuffisantes pour exploiter au mieux une recharge d'un parc de batteries dans une situation où les batteries arrivent de manière aléatoire au niveau d'un dispositif de recharge donné, en combinaison avec une utilisation d'une source d'énergie intermittente ou simplement discontinue ou rare, pour alimenter ces recharges, ces sources pouvant être variables de manière plus ou moins imprévisible, comme les sources d'énergie photovoltaïque ou éolienne.

Ainsi, il existe un besoin d'une solution améliorée de gestion intelligente de la recharge d'un parc de batterie(s) à partir d'une source d'énergie intermittente et de façon plus générale à partir d'une source d'énergie pas disponible de façon continue. Par exemple, une telle source pourrait être un réseau électrique national, dont l'utilisation devrait être optimisée et réduite, pour des raisons de coût ou de fourniture locale par exemple.

Un objet général de l'invention est donc de proposer une solution de gestion optimisée d'un parc de batteries, qui répond aux inconvénients mentionnés ci-dessus.

Plus précisément, un premier objet de l'invention est de proposer une solution de recharge d'un parc de batteries utilisant au maximum une certaine source d'énergie choisie, qui peut être intermittente.

Un second objet de l'invention est de proposer une solution de recharge d'un parc de batteries compatible avec leur arrivée aléatoire sur des bornes de recharge.

A cet effet, l'invention repose sur un procédé de recharge d'un parc de batteries à partir d'un dispositif de recharge comprenant plusieurs bornes de recharge alimentées électriquement à partir d'au moins une source de production d'énergie, selon la revendication 1.

L'énergie fictive peut être calculée comme une fonction du besoin d'énergie $\sum_i E_i(t)$, ou comme une fonction du besoin d'énergie $\sum_i E_i(t)$ et de l'énergie prédite $E_{prédite}$ et/ou de l'énergie prévisionnelle $E_{parcstat}$ de consommation d'énergie du dispositif de recharge sur la période fictive.

L'énergie fictive $E_{fictive}(t)$ peut être définie à un instant t par la formule :

$$E_{fictive}(t) = \sum_i E_i(t) * \frac{E_{prédite}}{E_{parcstat}}$$

L'énergie fictive $E_{fictive}(t)$ peut être définie à un instant t par la formule :

$$E_{fictive}(t) = r \sum_i E_i(t)$$

avec $0 < r < 2$.

L'énergie prévisionnelle $E_{parcstat}$ peut être estimée à partir de données statistiques de consommation énergétique du dispositif de recharge.

L'énergie prédite $E_{prédite}$ et/ou la puissance prédite $P_{prédite}(t)$ peut être estimée par un calcul théorique et/ou empirique à partir de données de prévisions météorologiques et/ou à partir de mesures de production d'énergie passées.

Le procédé de recharge d'un parc de batteries peut comprendre à un instant t une étape de calcul d'un instant $2t_0$ de fin de la période fictive pour lequel l'énergie prédite produite par les sources d'énergie du dispositif de recharge correspond à une fonction prédéterminée de l'énergie fictive $E_{fictive}$ par l'équation suivante :

$$2 \left[ \int_0^{t0} P_{prédite}(u)du \right] - \int_0^t P_{prédite}(u)du = E_{fictive}$$

Le procédé de recharge d'un parc de batteries peut comprendre la définition d'une puissance fictive $P_{fictive}(t)$ à un instant t par :

$P_{fictive}(t) = P_{prédite}(t)$ Si $t \leq t_0$,
$P_{fictive}(t) = min\ [P_{prédite}(2t_0 - t) ; P_{prédite}(t)]$ si $t_0 < t \leq 2t_0$
$P_{fictive}(t) = 0$ si $t > 2\ t_0$

L'étape de planification des recharges des batteries présentes dans le dispositif de recharge peut consister à prévoir la recharge de toutes ces batteries entre les instants t et au moins $2t_0$.

Le procédé de recharge d'un parc de batteries peut comprendre une étape préalable de détection d'un changement de configuration du parc de stationnement et une étape de nouvelle planification des recharges des batteries présentes dans le dispositif de recharge à chaque détection de changement.

L'invention porte aussi sur un dispositif de recharge d'un parc de batteries comprenant plusieurs bornes de recharge alimentées électriquement à partir d'au moins une source de production d'énergie, caractérisé en ce qu'il comprend une unité centrale qui met en œuvre le procédé de recharge du parc de batteries tel que défini précédemment.

Le dispositif de recharge d'un parc de batteries peut comprendre une source de production d'énergie solaire et/ou une source de production d'énergie éolienne.

Ses bornes de recharge peuvent être disposées sur des places de stationnement pour la recharge d'un parc de batteries de véhicules automobiles électriques.

L'invention porte aussi sur un système de recharge d'un parc de batteries comprenant un serveur central, caractérisé en ce que le serveur central est relié à au moins un dispositif de recharge tel que décrit ci-dessus par au moins un moyen de communication.

Ces objets, caractéristiques et avantages de la présente invention seront exposés en détail dans la description suivante d'un mode d'exécution particulier fait à titre non-limitatif en relation avec les figures jointes parmi lesquelles :

Les figures 1 à 4 illustrent le problème technique posé par l'invention dans le cadre d'un scénario particulier à titre d'exemple.

La figure 5 représente schématiquement le système mettant en œuvre le procédé de recharge de batteries selon un mode de réalisation de l'invention.

La figure 6 représente un algorithme d'un procédé de recharge de batteries selon le mode de réalisation de l'invention.

Les figures 7 à 10 illustrent le résultat obtenu par le procédé de recharge de batteries selon le mode de réalisation de l'invention dans le cadre du même scénario que celui présenté en référence aux figures 1 à 4.

L'invention va être illustrée dans le cas d'un parc de véhicules électriques à titre d'exemple. Un tel véhicule électrique peut être un vélo électrique, une voiture électrique, un segway, un scooter électrique, etc. Naturellement, l'invention pourrait être aisément transposée à tout dispositif électrique équipé d'une batterie pour son alimentation, et nécessitant des phases de recharge de sa batterie. De plus, pour des raisons de simplification, il sera considéré dans la description suivante que chaque véhicule est équipé d'une seule batterie. Toutefois, le procédé pourrait naturellement être appliqué de manière similaire à des véhicules équipés de plusieurs batteries. C'est pourquoi l'invention s'intéresse plus généralement au problème de la recharge d'un parc de batteries, notamment dans le cas où leur utilisation est aléatoire et ne permet pas de connaître précisément individuellement les moments où leur recharge sera nécessaire.

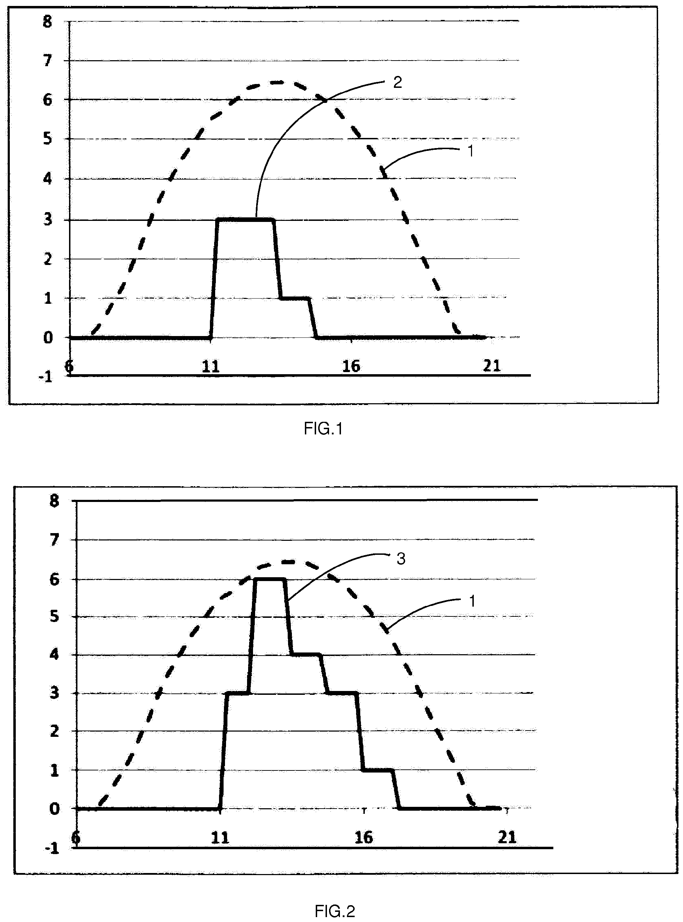

Afin d'illustrer le problème technique posé, prenons un exemple concret d'un parc de stationnement de véhicules électriques pouvant accueillir quatre véhicules, chaque place du parc de stationnement étant munie d'une borne de recharge reliée à une source de production d'énergie électrique photovoltaïque. Le dispositif de recharge de batteries associé au parc de stationnement peut établir une prévision de la production électrique photovoltaïque qui sera faite sur une journée, en tenant compte de prévisions météorologiques et/ou de mesures passées. On obtient ainsi la courbe 1 de puissance électrique disponible prédite, représentée sur les figures 1 à 4, qui comprend une crête à 6,5 kW en milieu de journée.

Nous supposons qu'un premier véhicule arrive vers 8H dans le parc de stationnement, un second véhicule arrive vers 11H30, un troisième vers 12H30 et un quatrième vers 15H.

Une première approche de planification sur la journée de la recharge des batteries détermine le début de la recharge de la batterie du premier véhicule vers 11H, pour se trouver dans une zone où la production électrique photovoltaïque sera déjà forte et a priori suffisante, avec une marge importante. La figure 1 représente ainsi par la courbe 2 la puissance consommée planifiée pour la recharge de ce premier véhicule.

Ensuite, à l'arrivée du second véhicule, le dispositif de recharge continue la recharge du premier véhicule, qui est déjà commencée et ne peut pas être interrompue, et planifie le début de la recharge du second véhicule vers 12H30, pour obtenir une nouvelle courbe 3 de consommation électrique pour la recharge simultanée des deux premiers véhicules, en utilisant l'énergie électrique photovoltaïque, comme cela est représenté sur la figure 2.

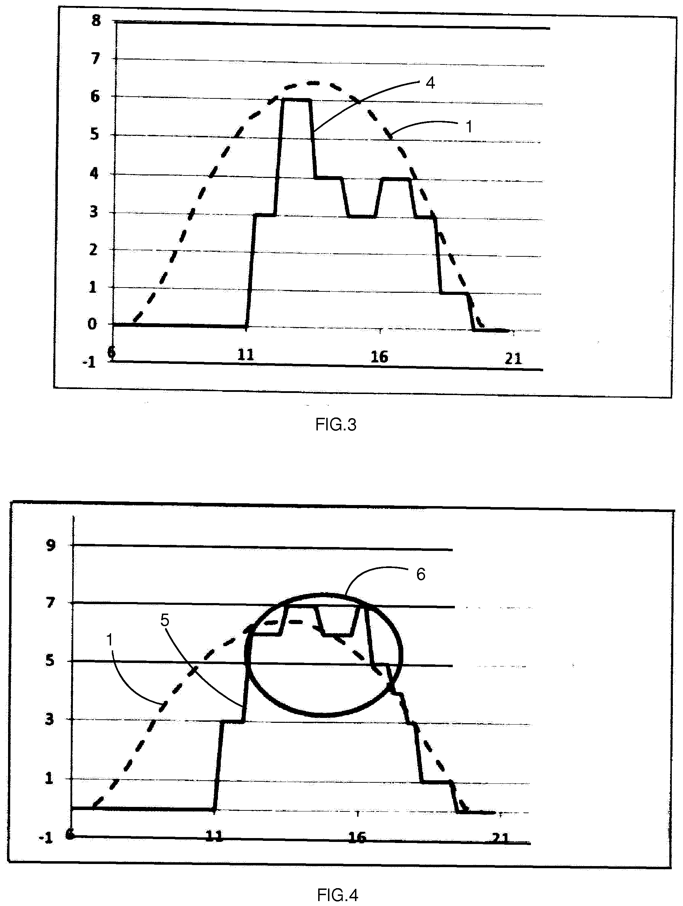

De manière similaire, à l'arrivée du troisième véhicule, le dispositif de recharge continue la recharge des deux premiers véhicules et planifie le début de la recharge du troisième véhicule vers 13H30, pour obtenir une nouvelle courbe 4 de consommation électrique pour la recharge simultanée des trois premiers véhicules, toujours en utilisant intégralement l'énergie électrique photovoltaïque, comme cela est représenté sur la figure 3.

Enfin, à l'arrivée du quatrième véhicule, le dispositif continue la recharge des trois premiers véhicules et planifie le début de la recharge du quatrième véhicule vers 15H30, pour obtenir une nouvelle courbe 5 de consommation électrique pour la recharge simultanée des quatre véhicules, représentée sur la figure 4. Dans ce scénario, il apparait une zone 6 dans laquelle la courbe 5 dépasse la courbe 1, ce qui signifie que la production électrique photovoltaïque devient insuffisante pour répondre au besoin pour recharger les quatre batteries présentes dans le parc avec la seule source d'énergie photovoltaïque. Le dispositif de recharge s'arrête ou fait alors ponctuellement appel à une source d'énergie électrique complémentaire pendant ces périodes de dépassement de la zone 6.

Lors de toutes les étapes de ce scénario, la planification des périodes de recharge des batteries mise en œuvre à chaque arrivée d'un véhicule automobile dans le parc de stationnement, pour obtenir les courbes 2 à 5, se fait selon toute méthode connue, par exemple sur la base d'une programmation linéaire mixte.

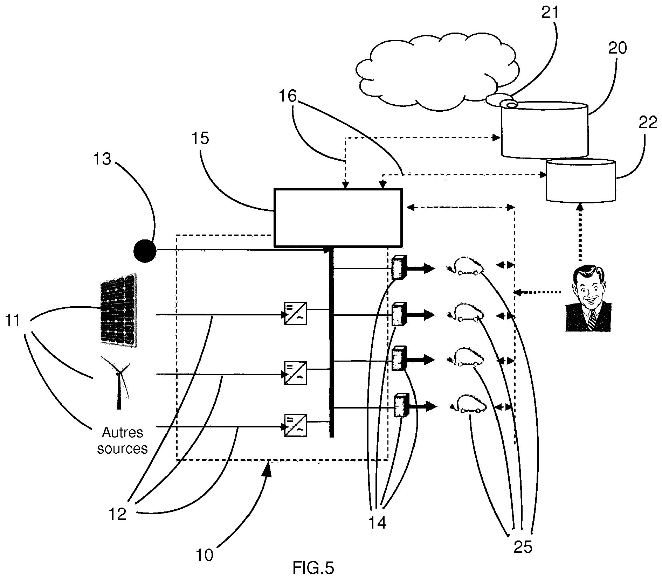

Nous allons maintenant décrire un mode de réalisation d'un procédé de recharge d'un parc de batteries, qui permet de faire face de manière optimisée à une situation telle que présentée par le scénario exposé ci-dessus, et qui est mis en œuvre par un système illustré par la figure 5.

Le système de recharge comprend un dispositif de recharge 10, relié à une ou plusieurs sources 11 de production d'énergie électrique par une liaison électrique 12, ces sources étant renouvelables et intermittentes dans cet exemple particulier, et relié de manière optionnelle à un réseau électrique traditionnel 13 pour faire face aux éventuelles insuffisances des sources précédentes. L'objectif est naturellement de ne pas avoir recours au réseau électrique traditionnel 13 pour éviter de le saturer et pour profiter des sources 11 de production d'énergie moins polluantes à disposition du dispositif de recharge. D'ailleurs, l'invention porte aussi sur un système comprenant au moins un dispositif de recharge autonome en énergie, c'est-à-dire non relié à un réseau électrique. Le dispositif de recharge 10 comprend des bornes 14 de recharge, alimentées ainsi électriquement par les sources 11 de production d'énergie, réparties sur des places de stationnement pour véhicule électrique et sur lesquelles peuvent se connecter des véhicules électriques 25. Il comprend de plus une unité centrale 15, qui comprend des moyens logiciels (software) et matériels (hardware) pour le pilotage du dispositif de recharge 10 de sorte à mettre en œuvre le procédé de recharge qui sera détaillé ci-après. Cette unité centrale 15 comprend ainsi notamment l'intelligence du dispositif, sous la forme de tout type de calculateur. Le dispositif de recharge 10 est de plus relié à un serveur central 20 par un ou plusieurs moyens de communication 16. Ce serveur central, qui peut être relié à plusieurs dispositifs de recharge de batteries, reçoit 21 des informations comme des données de prévisions météorologiques, et est relié à une base de données 22.

Un mode de réalisation d'un procédé de recharge d'un parc de batteries correspondant à un parc de véhicules automobiles électriques à partir d'un ou plusieurs dispositifs de recharge 10 va maintenant être détaillé. Ce procédé a pour objectif de permettre la planification de la recharge de plusieurs véhicules automobiles sur une journée, en utilisant au maximum les sources d'énergie, si possible sans avoir recours au réseau électrique 13.

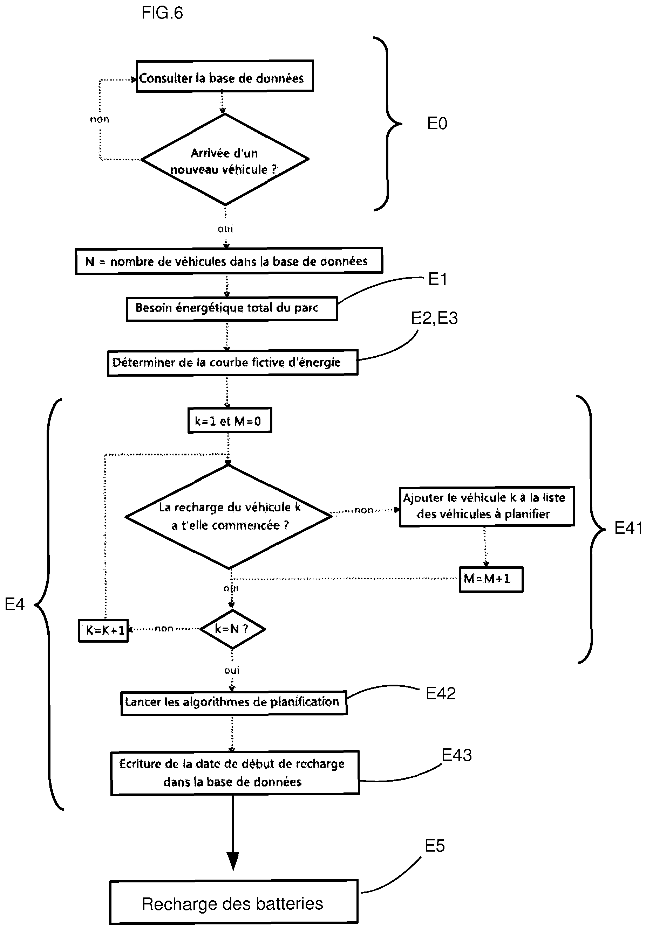

Le procédé de recharge est par exemple mis en œuvre à chaque arrivée ou départ d'un véhicule sur le parc de stationnement associé au dispositif de recharge 10. Il comprend, comme représenté par la figure 6, une première étape E1 de détermination du besoin énergétique $E_i(t)$ de chaque batterie i présente sur le parc à l'instant t, et éventuellement de mémorisation de la date de départ de chaque batterie. Ce besoin énergétique $E_i(t)$ dépend par exemple de l'état de charge de la batterie i, qui permet d'en déduire l'énergie nécessaire pour atteindre sa pleine charge, de son profil de charge particulier, etc. En variante, il peut aussi être envisagé une recharge partielle de la batterie i, par exemple si le besoin de l'utilisateur du véhicule correspondant est faible et/ou en cas d'insuffisance de la production d'énergie. Ce calcul permet de connaître le besoin énergétique total à l'instant t considéré au niveau du dispositif de recharge, calculé par $\sum_i E_i(t)$.

Lors de cette première étape E1, l'énergie prévisionnelle $E_{prédite}$ qui sera produite par les sources 11 d'énergie sur la journée est estimée, à partir de données de prévisions météorologiques ou par toute autre méthode, comme une méthode dite de persistance consistant à reprendre les mesures de production d'énergie de la veille, ou sur la base de courbes mémorisées, comme une courbe de saisonnalité. Ces données peuvent donc être estimées de manière théorique et/ou empirique. La puissance prévisionnelle ou prédite $P_{prédite}(t)$ à chaque instant t de la journée est ainsi aussi estimée. La période de prévision sera appelée période de référence.

De plus, l'énergie prévisionnelle $E_{parcstat}$ qui sera consommée par les batteries dans la journée à partir de l'instant t pour leur recharge est aussi estimée, par exemple à partir de données statistiques de consommation énergétique du dispositif de recharge, à partir d'une mémorisation des consommations passées. Ces données statistiques prennent ainsi en compte la fréquentation prévue du parc de stationnement. Elles peuvent être séparées en plusieurs catégories pour tenir compte de la nature différente de statistiques très différentes, comme la semaine ou le week-end.

En remarque, toute la description considère la journée comme période de référence pour la mise en œuvre du procédé. Toutefois, toute autre période de référence est envisageable.

Dans une seconde étape E2, le procédé comprend le calcul d'une énergie fictive $E_{fictive}(t)$, qui correspond à une énergie qu'on souhaite utiliser pour répondre au besoin identifié dans la planification à l'instant t, comme cela apparaîtra de manière plus claire par la suite.

Dans ce mode de réalisation, cette énergie fictive est définie par :

$$E_{fictive}(t) = \sum_i \ E_i(t) \ * \ \frac{E_{prédite}}{E_{parcstat}}$$

Le ratio $E_{prédite} / E_{parcstat}$ représente la part d'énergie pouvant répondre à la demande statistique des batteries. L'énergie fictive ainsi définie prend en compte à la fois le besoin énergétique des batteries et l'énergie a priori réellement disponible pour y répondre. En variante, une autre fonction aurait pu être définie pour le calcul de cette énergie fictive, par exemple de manière simplifiée sans prendre en compte ce ratio, c'est-à-dire par exemple en considérant que $E_{parcstat}$ = $E_{prédite}$. En variante, ce ratio peut aussi être défini arbitrairement, indépendamment de $E_{prédite}$ et $E_{parcstat}$ pour adapter la courbe de puissance fictive afin de tenir compte de critères d'utilisateurs, par une formule de type :

$$E_{fictive}(t) = r \ \sum_i \ E_i(t).$$

Par exemple, s'il est connu que le parc de batteries est sous-dimensionné par rapport aux besoins, l'énergie prédite sera toujours inférieure à l'énergie consommée : le rapport r sera compris entre 0 et 1. En revanche, s'il est connu que le parc de batteries est surdimensionné par rapport aux besoins, l'énergie prédite sera toujours supérieure à l'énergie consommée : le rapport r sera supérieur à 1. Cependant, une valeur supérieure à 2 ne serait pas intéressante dans la mesure où le parc étant surdimensionné à outrance, il n'est plus nécessaire d'utiliser l'invention qui tend à rapprocher les deux courbes de prédiction et de consommation. Ainsi, de manière générale, on choisit r entre 0 et 2 inclus.

Dans une troisième étape E3, le procédé détermine une courbe de puissance fictive, qui permet de répartir dans le temps l'énergie fictive à utiliser. Cette étape nécessite d'abord le calcul d'un instant $t_0$ pour lequel l'énergie produite par les sources du dispositif de recharge correspond à la moitié de l'énergie fictive calculée à l'étape précédente. L'instant $t_0$ est donc défini par l'équation suivante :

$$2 \left[ \int_0^{t_0} P_{prédite}(u)du \ \right] - \int_0^{t} P_{prédite}(u)du = E_{fictive}$$

On appellera période fictive la période de 0 à $2t_0$.
Ensuite, la courbe de puissance fictive est définie par :

$$P_{fictive}(t) = P_{prédite}(t) \text{ si } t \leq t_0,$$
$$P_{fictive}(t) = \min [P_{prédite}(2t_0 - t) ; P_{prédite}(t)] \text{ si } t_0 < t \leq 2t_0$$
$$P_{fictive}(t) = 0 \text{ si } t > 2 t_0$$

Cette approche permet ainsi de déterminer une courbe fictive de production d'énergie fournie par les sources d'énergie 11 du dispositif de recharge, qui est optimale à court terme pour répondre au besoin identifié du parc de batteries ou qui suffit juste à couvrir ce besoin.

Dans le cas particulier pour lequel l'énergie fictive est supérieure à l'énergie prédite, c'est-à-dire l'énergie qui sera produite par les sources d'énergie 11 selon un calcul de prédiction, alors la courbe fictive est choisie égale à la courbe de puissance prédite.

Ensuite, le procédé de recharge met en œuvre une quatrième étape E4 de planification de la recharge des batteries du parc au sein de la courbe de puissance fictive définie lors de l'étape précédente. Cette planification se fait selon toute méthode connue, par exemple sur la base d'une programmation linéaire mixte, selon l'approche présentée en référence aux figures 1 à 4. Le procédé présente ainsi l'avantage de conserver les méthodes déjà maitrisées de planification de la consommation d'énergie à partir d'une courbe de puissance disponible prédéfinie.

Toutefois, le principe de l'invention prévoit une période plus courte que la période de référence d'une journée, que nous appelons période fictive puisque définie à partir de l'énergie fictive, permettant d'initier et planifier la recharge optimale à court terme des batteries présentes au sein du dispositif de recharge. Il en résulte une recharge des batteries au plus tôt et de manière compatible avec l'énergie disponible, ce qui permet de garder une réserve d'énergie ultérieure en cas d'arrivée d'un ou plusieurs autres véhicules. De plus, la planification définit une courbe de consommation d'énergie qui suit au mieux, au plus proche, le profil de la courbe de puissance fictive prédéterminée, selon une répartition optimisée.

Enfin, lorsque cette planification est terminée, le procédé met en œuvre une dernière étape E5 de recharge des batteries présentes selon la planification temporelle déterminée par les étapes précédentes.

La figure 6 résume les étapes du procédé de recharge sous forme d'algorithme.

Dans une étape préalable E0, le dispositif de recharge détecte un changement éventuel de la configuration du parc de véhicules, comme une arrivée éventuelle d'un nouveau véhicule. Pour cela, la base de données 22 peut être utilisée pour mémoriser cette configuration du parc de stationnement et être consultée lors de cette étape. En variante, cette mémoire peut être une autre mémoire locale, directement liée à l'unité centrale 15.

Si un événement de changement de la configuration du parc de stationnement est survenu, le procédé de recharge décrit précédemment est mis en œuvre, de manière à planifier de manière dynamique la recharge des batteries présentes, sur la base de la connaissance du nouveau nombre N de véhicules automobiles présents dans le parc. Il met alors en œuvre les étapes E2 et E3 décrites précédemment.

Ensuite, il met en œuvre la quatrième étape E4 de planification des phases de recharge en tant que telle.

En remarque, cette quatrième étape E4 comprend une première sous-étape E41 consistant à déterminer les véhicules pour lesquels la recharge est déjà initiée, car ces recharges ne peuvent en général pas être interrompues et sont donc automatiquement continuées. Cependant, le procédé peut être mis en œuvre même si les charges sont interrompues, l'étape E41 étant alors ignorée. La planification fait alors l'objet d'une seconde sous-étape E42 et s'intéresse plus particulièrement aux véhicules pour lesquels la recharge de la batterie n'est pas commencée. Enfin, cette quatrième étape se termine par une troisième sous-étape E43 de mémorisation dans une mémoire électronique du système de recharge des résultats de la planification, comprenant pour chaque véhicule pour lesquels la phase de recharge n'est pas commencée l'heure planifiée de début de la recharge de sa batterie.

En remarque, toutes les mémorisations envisagées peuvent être faites sur la base de données ou mémoire 22 distante, et/ou sur une mémoire locale disposée au niveau de l'unité centrale 15. De plus, les étapes du procédé peuvent aussi être mises en œuvre localement, au niveau de l'unité centrale 15, et/ou à distance, au niveau du serveur distant 20 ou au niveau des véhicules 25.

Dans toutes les étapes du procédé, le nombre de véhicules maximum est aussi considéré, car il permet de savoir si le parc de stationnement est complet ou pas, s'il est susceptible de recevoir encore beaucoup de batteries à recharger ou non.

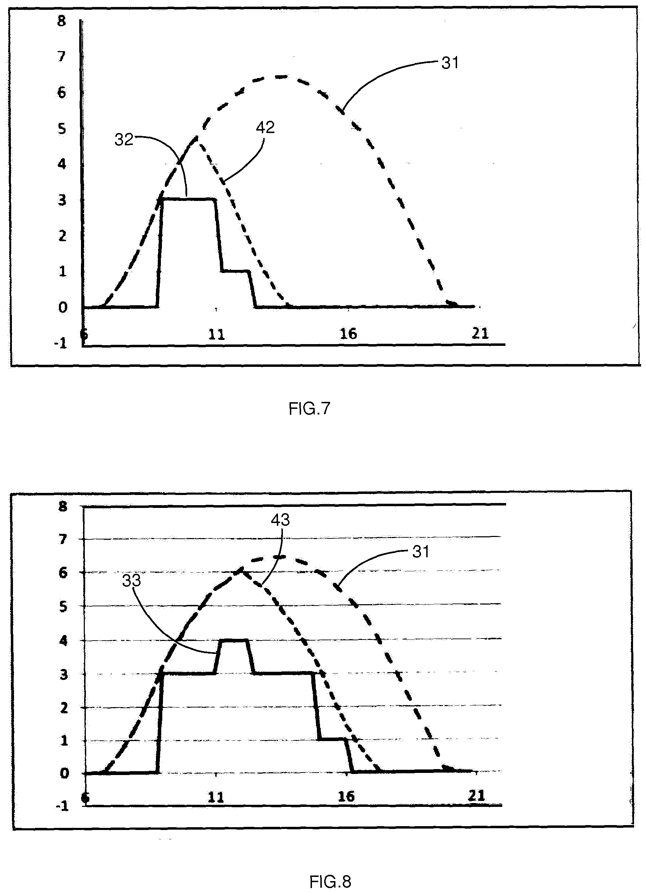

Les figures 7 à 10 illustrent la mise en œuvre du procédé de recharge décrit précédemment dans le cas du scénario décrit précédemment, en référence aux figures 1 à 4.

Ainsi, la figure 7 représente ainsi la courbe 31 de puissance électrique disponible prédite, qui correspond à la courbe 1 de la figure 1, ainsi que la courbe de puissance fictive 42 définie par le procédé explicité ci-dessus. Enfin, la courbe 32 représente la puissance consommée planifiée pour la recharge du premier véhicule. Contrairement à l'approche présentée en référence avec la figure 1, le procédé définit ainsi une période fictive [t1 ; t2] à partir de la courbe de puissance fictive 42, durant laquelle l'énergie disponible suffit et est adaptée à la recharge de la première batterie.

**EP 2 737 591 B1**

Comme on le voit sur cette figure, la courbe 32 de planification de la recharge suit au plus proche la courbe de puissance fictive, qui délimite par définition une quantité d'énergie optimale et dans une période la plus rapprochée.

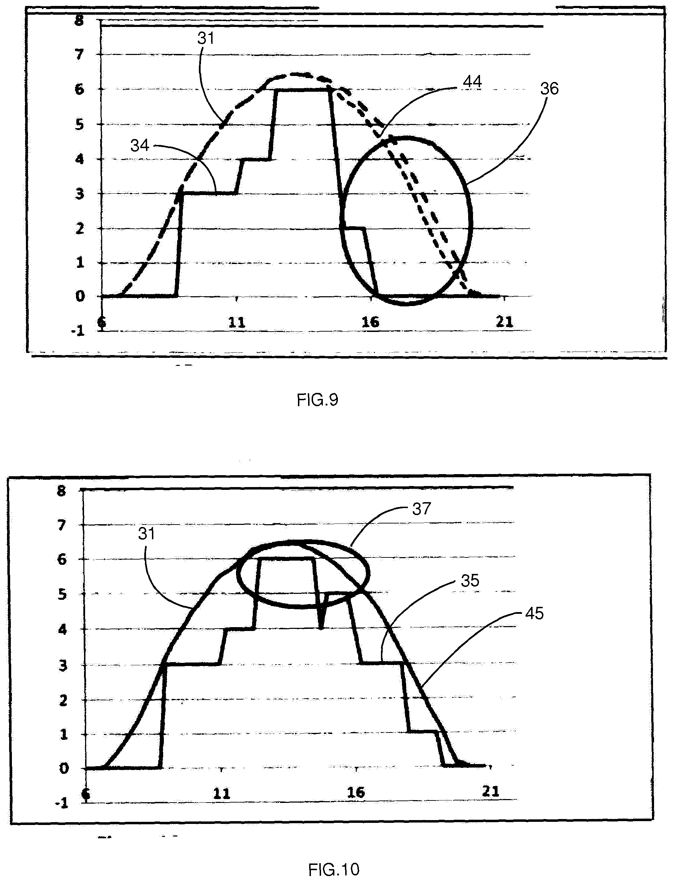

A l'arrivée du second véhicule, le procédé recalcule la planification et détermine une nouvelle courbe 33 de planification de la recharge de deux batteries, représentée sur la figure 8, intégrée au sein d'une courbe de puissance fictive 43 recalculée. De même, à l'arrivée du troisième véhicule, le procédé recalcule la planification et détermine une nouvelle courbe 34, représentée sur la figure 9, intégrée au sein d'une nouvelle courbe de puissance fictive 44. Enfin, à l'arrivée du quatrième véhicule, le procédé recalcule la planification et détermine une courbe 35 de planification, représentée sur la figure 10, intégrée au sein d'une courbe de puissance fictive 45.

Il apparaît que ce procédé de recharge des batteries permet d'atteindre leur recharge en utilisant exclusivement l'énergie prédite, fournie par les sources d'énergie 11 du dispositif de recharge, sans avoir recours à un réseau électrique 13, au contraire de l'approche décrite en référence avec la figure 4. La zone 36 de la figure 9 montre que l'approche adoptée d'anticipation des recharges des batteries à plus court terme permet de libérer un espace d'énergie disponible en fin de journée pour prendre en charge une arrivée tardive d'un véhicule supplémentaire. La zone 37 de la courbe 35 de la figure 10 montre que le pic de consommation reste inférieur à la puissance disponible générée par le dispositif de recharge à partir des sources de production d'énergie.

**Revendications**

1. Procédé de recharge d'un parc de batteries à partir d'un dispositif de recharge (10) comprenant plusieurs bornes (14) de recharge alimentées électriquement à partir d'au moins une source (11) de production d'énergie intermittente, comme une source d'énergie photovoltaïque ou éolienne, par une liaison électrique (12), **caractérisé en ce qu'**il comprend les étapes suivantes :

   a. Estimation de la future production d'énergie, soit l'énergie prédite $E_{prédite}$ et la puissance prédite $P_{prédite}(t)$ en fonction du temps t, au cours d'une période de référence par ladite au moins une source de production d'énergie intermittente;
   b. Estimation du besoin d'énergie $\sum_i E_i(t)$ pour la recharge des batteries présentes dans le dispositif de recharge, qui correspond à la somme du besoin énergétique $E_i(t)$ de chaque batterie i présente sur le parc à un instant t ;
   c. Calcul d'une puissance fictive $P_{fictive}$ inférieure ou égale à la puissance prédite et apte à répondre à tout ou partie de ce besoin d'énergie en une période fictive distincte ou non de la période de référence, correspondant à une énergie fictive $E_{fictive}(t)$ définie à un instant t par la formule : $E_{fictive}(t) = r \sum_i E_i(t)$ avec $0 < r < 2$, le ratio r étant défini à partir de l'énergie prédite Eprédite et de l'énergie prévisionnelle Eparcstat de consommation d'énergie du dispositif de recharge sur la période fictive par la formule : $\dfrac{E_{prédite}}{E_{parcstat}}$
   d. Planification des recharges des batteries présentes dans le dispositif de recharge sur cette période fictive.

2. Procédé de recharge d'un parc de batteries selon la revendication précédente, **caractérisé en ce qu'**il comprend une étape consistant à fixer le rapport r entre 0 et 1 s'il est connu que le parc de batteries est sous-dimensionné par rapport aux besoins, et à fixer le rapport r entre 1 et 2 s'il est connu que le parc de batteries est surdimensionné par rapport aux besoins.

3. Procédé de recharge d'un parc de batteries selon l'une des revendications précédentes, **caractérisé en ce que** l'énergie prévisionnelle $E_{parcstat}$ de consommation d'énergie du dispositif de recharge sur la période fictive est estimée à partir de données statistiques de consommation énergétique du dispositif de recharge.

4. Procédé de recharge d'un parc de batteries selon l'une des revendications précédentes, **caractérisé en ce que** l'énergie prédite $E_{prédite}$ et/ou la puissance prédite $P_{prédite}(t)$ est estimée par un calcul théorique et/ou empirique à partir de données de prévisions météorologiques et/ou à partir de mesures de production d'énergie passées.

5. Procédé de recharge d'un parc de batteries selon l'une des revendications précédentes, **caractérisé en ce qu'**il comprend à un instant t une étape de calcul d'un instant $2t_0$ de fin de la période fictive pour lequel l'énergie prédite produite par les sources d'énergie du dispositif de recharge correspond à une fonction prédéterminée de l'énergie fictive $E_{fictive}$ par l'équation suivante :

$$2 \left[ \int_0^{t0} P\text{prédite}(u)du \right] - \int_0^t P\text{prédite}(u)du = E_{\text{fictive}}$$

6. Procédé de recharge d'un parc de batteries selon la revendication 4 ou 5, **caractérisé en ce qu'**il comprend la définition d'une puissance fictive $P_{\text{fictive}}$ (t) à un instant t par :

$P_{\text{fictive}}$ (t) = $P_{\text{prédite}}$(t) si t ≤ $t_0$,
$P_{\text{fictive}}$(t) = min [$P_{\text{prédite}}$(2$t_0$ - t) ; $P_{\text{prédite}}$(t)] si $t_0$ < t ≤ 2$t_0$
$P_{\text{fictive}}$ (t) = 0 si t > 2 $t_0$

7. Procédé de recharge d'un parc de batteries selon la revendication précédente, **caractérisé en ce que** l'étape de planification des recharges des batteries présentes dans le dispositif de recharge consiste à prévoir la recharge de toutes ces batteries entre les instants t et au moins 2$t_0$.

8. Procédé de recharge d'un parc de batteries selon l'une des revendications précédentes, **caractérisé en ce qu'**il comprend une étape préalable de détection d'un changement de configuration du parc de stationnement et une étape de nouvelle planification des recharges des batteries présentes dans le dispositif de recharge à chaque détection de changement.

9. Dispositif de recharge (10) d'un parc de batteries comprenant plusieurs bornes (14) de recharge alimentées électriquement à partir d'au moins une source (11) de production d'énergie, **caractérisé en ce qu'**il comprend une unité centrale (15) qui met en œuvre le procédé de recharge du parc de batteries selon l'une des revendications précédentes.

10. Dispositif de recharge (10) d'un parc de batteries selon la revendication précédente, **caractérisé en ce qu'**il comprend une source (11) de production d'énergie solaire et/ou une source (11) de production d'énergie éolienne.

11. Dispositif de recharge (10) d'un parc de batteries selon la revendication 9 ou 10, **caractérisé en ce que** ses bornes (14) de recharge sont disposées sur des places de stationnement pour la recharge d'un parc de batteries de véhicules automobiles électriques.

12. Système de recharge (1) d'un parc de batteries comprenant un serveur central (20), **caractérisé en ce que** le serveur central est relié à au moins un dispositif de recharge selon l'une des revendications 9 à 11 par au moins un moyen de communication (16).

**Patentansprüche**

1. Verfahren zur Wiederaufladung einer Gruppe von Batterien mittels einer Wiederaufladevorrichtung (10), die mehrere Ladestationen (14) umfasst, die von wenigstens einer Quelle (11) schwankender Energieerzeugung, wie einer photovoltaischen oder Windenergiequelle, über eine elektrische Verbindung (12) mit Strom versorgt werden, **dadurch gekennzeichnet, dass** es die folgenden Schritte umfasst:

   a. Schätzung der zukünftigen Energieerzeugung, nämlich der vorhergesagten Energie $E_{\text{vorhergesagt}}$ und der vorhergesagten Leistung $P_{\text{vorhergesagt}}$ (t) in Abhängigkeit von der Zeit t, während eines Referenzzeitraums durch die wenigstens eine Quelle schwankender Energieerzeugung;
   b. Schätzung des Bedarfs an Energie $\sum_i E_i$ (t) für die Wiederaufladung der Batterien, die in der Wiederaufladevorrichtung vorhanden sind, welcher der Summe des Energiebedarfs $E_i$(t) aller Batterien i entspricht, die zu einem Zeitpunkt t in der Gruppe vorhanden sind;

   c. Berechnung einer fiktiven Leistung $P_{\text{fiktiv}}$, die kleiner oder gleich der vorhergesagten Leistung ist und geeignet ist, diesen gesamten Energiebedarf oder einen Teil davon in einem fiktiven Zeitraum, der vom Referenzzeitraum verschieden ist oder nicht, zu erfüllen, und die einer fiktiven Energie $E_{\text{fiktiv}}$ (t) entspricht, die zu einem Zeitpunkt t durch die Formel $E_{\text{fiktiv}}$(t) = r $\sum_i E_i$ (t) definiert ist, mit 0 < r < 2, wobei das Verhältnis r ausgehend von der vorhergesagten Energie $E_{\text{vorhergesagt}}$ und der voraussichtlichen Energie $E_{\text{Parkpl}}$ des Energieverbrauchs der Wiederaufladevorrichtung über den fiktiven Zeitraum durch die Formel definiert ist: $\dfrac{E_{vorhergesagt}}{E_{Parkpl}}$;

 d. Planung der Wiederaufladungen der Batterien, die in der Wiederaufladevorrichtung vorhanden sind, über diesen fiktiven Zeitraum.

**2.** Verfahren zur Wiederaufladung einer Gruppe von Batterien nach dem vorhergehenden Anspruch, **dadurch gekennzeichnet, dass** es einen Schritt umfasst, der darin besteht, das Verhältnis r zwischen 0 und 1 festzulegen, wenn bekannt ist, dass die Gruppe von Batterien in Bezug auf den Bedarf unterdimensioniert ist, und das Verhältnis r zwischen 1 und 2 festzulegen, wenn bekannt ist, dass die Gruppe von Batterien in Bezug auf den Bedarf überdimensioniert ist.

**3.** Verfahren zur Wiederaufladung einer Gruppe von Batterien nach einem der vorhergehenden Ansprüche, **dadurch gekennzeichnet, dass** die voraussichtliche Energie $E_{Parkpl}$ des Energieverbrauchs der Wiederaufladevorrichtung über den fiktiven Zeitraum anhand von statistischen Daten des Energieverbrauchs der Wiederaufladevorrichtung geschätzt wird.

**4.** Verfahren zur Wiederaufladung einer Gruppe von Batterien nach einem der vorhergehenden Ansprüche, **dadurch gekennzeichnet, dass** die vorhergesagte Energie $E_{vorhergesagt}$ und/oder die vorhergesagte Leistung $P_{vorhergesagt}(t)$ durch eine theoretische und/oder empirische Berechnung anhand von Daten von Wettervorsagen und/oder anhand von früheren Messungen der Energieerzeugung geschätzt werden.

**5.** Verfahren zur Wiederaufladung einer Gruppe von Batterien nach einem der vorhergehenden Ansprüche, **dadurch gekennzeichnet, dass** es zu einem Zeitpunkt t einen Schritt der Berechnung eines Endzeitpunkts $2t_0$ des fiktiven Zeitraums, für welchen die vorhergesagte Energie, die von den Energiequellen der Wiederaufladevorrichtung erzeugt wird, einer vorbestimmten Funktion der fiktiven Energie $E_{fiktiv}$ entspricht, durch die folgende Gleichung umfasst:

$$2\left[\int_0^{t0} P_{vorhergesagt}(u)\,du\right] - \int_0^t P_{vorhergesagt}(u)\,du = E_{fiktiv}$$

**6.** Verfahren zur Wiederaufladung einer Gruppe von Batterien nach Anspruch 4 oder 5, **dadurch gekennzeichnet, dass** es die Definition einer fiktiven Leistung $P_{fiktiv}(t)$ zu einem Zeitpunkt t durch Folgendes umfasst:

$P_{fiktiv}(t) = P_{vorhergesagt}(t)$, falls $t \leq t_0$,
$P_{fiktiv}(t) = \min[P_{vorhergesagt}(2t_0-t); P_{vorhergesagt}(t)]$, falls $t_0 < t \leq 2t_0$,
$P_{fiktiv}(t) = 0$, falls $t > 2t_0$.

**7.** Verfahren zur Wiederaufladung einer Gruppe von Batterien nach dem vorhergehenden Anspruch, **dadurch gekennzeichnet, dass** der Schritt der Planung der Wiederaufladungen der Batterien, die in der Wiederaufladevorrichtung vorhanden sind, darin besteht, die Wiederaufladung aller dieser Batterien zwischen den Zeitpunkten t und mindestens $2t_0$ vorzusehen.

**8.** Verfahren zur Wiederaufladung einer Gruppe von Batterien nach einem der vorhergehenden Ansprüche, **dadurch gekennzeichnet, dass** es einen vorausgehenden Schritt der Erkennung einer Änderung der Konfiguration des Parkplatzes und einen Schritt der Neuplanung der Wiederaufladungen der Batterien, die in der Wiederaufladevorrichtung vorhanden sind, bei jeder Erkennung einer Änderung umfasst.

**9.** Vorrichtung zur Wiederaufladung (10) einer Gruppe von Batterien, welche mehrere Ladestationen (14) umfasst, die von wenigstens einer Quelle (11) der Energieerzeugung mit Strom versorgt werden, **dadurch gekennzeichnet, dass** sie eine Zentraleinheit (15) umfasst, welche das Verfahren zur Wiederaufladung der Gruppe von Batterien nach einem der vorhergehenden Ansprüche durchführt.

**10.** Vorrichtung zur Wiederaufladung (10) einer Gruppe von Batterien nach dem vorhergehenden Anspruch, **dadurch gekennzeichnet, dass** sie eine Quelle (11) zur Erzeugung von Solarenergie und/oder eine Quelle (11) zur Erzeugung von Windenergie umfasst.

**11.** Vorrichtung zur Wiederaufladung (10) einer Gruppe von Batterien nach Anspruch 9 oder 10, **dadurch gekenn-**

**zeichnet, dass** ihre Ladestationen (14) auf Stellplätzen für die Wiederaufladung einer Gruppe von Batterien von elektrischen Kraftfahrzeugen angeordnet sind.

12. System zur Wiederaufladung (1) einer Gruppe von Batterien, welches einen zentralen Server (20) umfasst, **dadurch gekennzeichnet, dass** der zentrale Server mit wenigstens einer Vorrichtung zur Wiederaufladung nach einem der Ansprüche 9 bis 11 über wenigstens ein Kommunikationsmittel (16) verbunden ist.

**Claims**

1. Method for recharging a pool of batteries from a recharging device (10) comprising several recharging terminals (14) supplied electrically from at least one intermittent energy production source (11), such as sources of photovoltaic or wind energy, by an electrical link (12), **characterized in that** it comprises the following steps:

   a. Estimation of the future production of energy, i.e. the predicted energy $E_{predicted}$ and the predicted power $P_{predicted}(t)$ as a function of time t, in the course of a reference period by said at least one intermittent energy production source;
   b. Estimation of the energy need $\sum_i E_i(t)$ for the recharging of the batteries present in the recharging device, which corresponds to the sum of the energy need $E_i(t)$ of each battery i present in the pool at an instant t ;
   c. Computation of a dummy power $P_{dummy}$ which is less than or equal to the predicted power and able to address all or part of this energy need in a dummy period which may or may not be distinct from the reference period, corresponding to a dummy energy $E_{dummy}(t)$ defined at an instant t by the formula: $E_{dummy}(t) = r \sum_i E_i(t)$ with $0 < r < 2$, the ratio r being defined from the predicted energy $E_{predicted}$ and from the forecast energy $E_{carpark}$ of energy consumption of the recharging device over the dummy period by the formula: $\dfrac{E_{predicted}}{E_{carpark}}$

   d. Scheduling of the rechargings of the batteries present in the recharging device over this dummy period.

2. Method for recharging a pool of batteries according to the preceding claim, **characterized in that** it comprises a step consisting in setting the ratio r between 0 and 1 if it is known that the pool of batteries is under-dimensioned relative to the needs, and in setting the ratio r between 1 and 2 if it is known that the pool of batteries is overdimensioned relative to the needs.

3. Method for recharging a pool of batteries according to one of the preceding Claims, **characterized in that** the forecast energy $E_{carpark}$ of energy consumption of the recharging device in the dummy period is estimated on the basis of statistical data of energy consumption of the recharging device.

4. Method for recharging a pool of batteries according to one of the preceding claims, **characterized in that** the predicted energy $E_{predicted}$ and/or the predicted power $P_{predicted}(t)$ is estimated by a theoretical and/or empirical computation on the basis of data of weather forecasts and/or on the basis of past measurements of energy production.

5. Method for recharging a pool of batteries according to one of the preceding claims, **characterized in that** it comprises at an instant t a step of computing an end-of-dummy-period instant $2t_0$ for which the predicted energy produced by the energy sources of the recharging device corresponds to a predetermined function of the dummy energy $E_{dummy}$ through the following equation:

$$2 \left[ \int_0^{t0} P_{predicted}(u)\,du \right] - \int_0^t P_{predicted}(u)\,du = E_{dummy}$$

6. Method for recharging a pool of batteries according to Claim 4 or 5, **characterized in that** it comprises the definition of a dummy power $P_{dummy}(t)$ at an instant t by:

   $P_{dummy}(t) = P_{predicted}(t)$ if $t \le t_0$,
   $P_{dummy}(t) = \min [P_{predicted}(2t_0 - t); P_{predicted}(t)]$ if $t_0 < t \le 2t_0$
   $P_{dummy}(t) = 0$ if $t > 2\,t_0$

7. Method for recharging a pool of batteries according to the preceding claim, **characterized in that** the step of scheduling the rechargings of the batteries present in the recharging device consists in providing for the recharging of all these batteries between the instants t and at least $2t_0$.

8. Method for recharging a pool of batteries according to one of the preceding claims, **characterized in that** it comprises a prior step of detecting a change of configuration of the car park and a step of new scheduling of the rechargings of the batteries present in the recharging device at each detection of change.

9. Device (10) for recharging a pool of batteries comprising several recharging terminals (14) supplied electrically from at least one energy production source (11), **characterized in that** it comprises a central unit (15) which implements the method for recharging the pool of batteries according to one of the preceding claims.

10. Device (10) for recharging a pool of batteries according to the preceding claim, **characterized in that** it comprises a solar energy production source (11) and/or a wind energy production source (11).

11. Device (10) for recharging a pool of batteries according to Claim 9 or 10, **characterized in that** its recharging terminals (14) are disposed in parking spaces for the recharging of a pool of batteries of electric automotive vehicles.

12. System (1) for recharging a pool of batteries comprising a central server (20), **characterized in that** the central server is linked to at least one recharging device according to one of Claims 9 to 11 by at least one communication means (16).

FIG.1

FIG.2

FIG.3

FIG.4

FIG.5

Autres
sources

FIG.6

```
          ┌──────────────────────────┐
    ┌─────▶│ Consulter la base de données │
    │      └──────────────────────────┘           ⎫
    │                   │                          ⎪
  non                   ▼                          ⎪
    │          ╱─────────────────╲                 ⎬  E0
    │         ╱   Arrivée d'un     ╲               ⎪
    └────────│  nouveau véhicule ?  │              ⎪
              ╲                   ╱                ⎭
               ╲─────────────────╱
                       │
                      oui
                       │
                       ▼
┌────────────────────────────────────────────┐
│ N = nombre de véhicules dans la base de données │ ─── E1
└────────────────────────────────────────────┘
                       │
                       ▼
        ┌──────────────────────────┐
        │ Besoin énergétique total du parc │ ─── E2,E3
        └──────────────────────────┘
                       │
                       ▼
      ┌────────────────────────────────┐
      │ Déterminer de la courbe fictive d'énergie │
      └────────────────────────────────┘
```

```
                    ┌──────────────┐
                    │  k=1 et M=0  │
                    └──────────────┘
                           │
                           ▼
              ╱───────────────────────╲          ┌──────────────────────────┐
             ╱   La recharge du véhicule k  ╲ ·····non····▶│ Ajouter le véhicule k à la liste │
            │    a t'elle commencée ?       │      │  des véhicules à planifier  │
             ╲                           ╱          └──────────────────────────┘
              ╲───────────────────────╱                          │
                           │                                     ▼
                          oui                            ┌──────────┐
                           │              ················│ M = M+1  │
                           ▼                              └──────────┘
        ┌────────┐     ╱──────╲
        │ K=K+1  │◀·····non·····│ k=N ? │
        └────────┘     ╲──────╱
                           │
                          oui
                           │
                           ▼
         ┌────────────────────────────────┐
         │ Lancer les algorithmes de planification │ ─── E42
         └────────────────────────────────┘
                           │
                           ▼
         ┌────────────────────────────────┐
         │ Ecriture de la date de début de recharge │ ─── E43
         │      dans la base de données       │
         └────────────────────────────────┘
                           │
                           ▼
         ┌────────────────────────────────┐
         │      Recharge des batteries        │ ─── E5
         └────────────────────────────────┘
```

E4

E41

FIG.7

FIG.8

FIG.9

FIG.10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2952247
- US 5548200 A
- US 2010017249 A
- JP 2010213507 B